# EUROPEAN PATENT APPLICATION

(11) **EP 0 653 594 A2**
(43) Date of publication of application: **17.05.1995**
(21) Application number: 94308346.9
(22) Date of filing: 11.11.1994
(51) Int. Cl.: F24D 19/10

(54) **Gas fired boiler arrangements**

(30) Priority: 11.11.1993 GB 9323255
(71) Applicant: BLUE CIRCLE HEATING LIMITED, Rugby, Warwickshire CV21 3JH (GB)
(72) Inventor: Kinge, Richard A.G., Leamington Spa, Warwickshire, CV33 9SD (GB)
(74) Representative: Lawrence, Brian Richard

(57) **Abstract**

A gas fired boiler arrangement comprises a boiler control arrangement for controlling the operation of a gas burner and a pump P which circulates water through a heat exchanger heated by the gas burner, the arrangement comprising a pair of two-position switches 2,3 which in one position thereof are responsive to a demand for heat for causing the gas burner to be ignited and the pump P to be operated, and which are responsive to a sensed temperature for causing the switches 2,3 to be operated to a second position in which the pump P is operated without the gas burner being ignited for pump overrun purposes (Fig. 1).

## Description

This invention relates to gas fired boiler arrangements, and is especially applicable to gas fired central heating boilers.

Most gas fired central heating boilers employ a thermostat to switch the gas burner on and off as the outgoing water temperature varies around the desired set point. Because of the thermal capacity of the heat exchanger, the temperature usually further increases after the shut-down of the burner sometimes causing overheating. This potential problem is normally avoided by providing a secondary thermostat which maintains the operation of the heating system water circulating pump until the temperature has fallen sufficiently. This pump continuation feature is commonly known as "pump-overrun".

The pump overrun feature also provides a secondary benefit in that it usefully extracts the residual heat contained in the heat exchanger for transfer to the system water.

One problem with such a boiler is that it is necessary to provide two thermostats which operate at different temperatures for monitoring the outgoing water temperature.

It is an object of the present invention to provide an improved gas fired boiler which obviates the need for a second thermostat.

According to the present invention there is provided a gas fired boiler arrangement comprising a gas burner, a heat exchanger which is heated by said gas burner when said gas burner is ignited, pump means for causing fluid to flow through said heat exchanger to be heated thereby, and a boiler control arrangement for controlling the operation of said gas burner and said pump, said boiler control arrangement comprising switch means having two positions, which, in one position thereof is responsive to a demand for heat for causing said gas burner to be ignited and said pump means to be operated, and which is responsive to a sensed temperature for causing the switch means to assume a second position thereof in which said pump means is caused to operate without said gas burner being ignited for pump overrun purposes.

In one preferred arrangement for carrying out the invention it may be arranged that said switch means forms part of a thermostatic control in which said switch means switches from said one position to said second position in response to a first sensed temperature, and switches from said second position to said one position in response to a second sensed temperature, said second sensed temperature being lower than said first sensed temperature.

Advantageously, said switch means comprises a first two-position switch to which a switched live supply is applied corresponding to a call for heat, and which in a de-energised first position of said first switch applies said switched live supply to means for causing said burner means to be ignited, and in which said switch means comprises a second two-position switch which, in a de-energised first position, connects said pump means to the switch live supply afforded by said first switch, and which in an energised second position thereof connects said pump means to a permanent live supply for pump overrun purposes.

In a second preferred arrangement for carrying out the invention it may be arranged that temperature sensing means is provided for causing said switch means to be operated to its second position in response to a predetermined temperature being sensed, and timer means is provided for maintaining said switch means in said second position for a predetermined time period for causing said pump means to be operated for pump overrun purposes.

Advantageously, power supply means may be provided which is energised when said pump means is energised and which supplies power to said temperature sensing means and said timer means.

It may be arranged that said power supply means comprises an isolating transformer, and isolating resistor means are provided for electrically isolating said timer means and said temperature sensing means.

It may further be arranged that said switch means comprises a first two-position switch to which a switched live supply is applied corresponding to a call for heat, and which in a de-energised first position of said first switch applies said switched live supply to said timer means and to means for causing said burner means to be ignited, and in which said switch means comprises a second two-position switch which, in a de-energised first position, connects said pump means and said power supply means to the switch live supply afforded by said first switch, and which in an energised second position thereof connects said pump means and said power supply means to a permanent live supply for pump overrun purposes.

Preferably, said first switch and said second switch are constituted by relay contacts of a relay which is operated by said temperature sensing means.

Some exemplary embodiments of the invention will now be described, reference being made to the accompanying drawings, in which:
Fig. 1 is a block schematic diagram of a part of a gas fired boiler arrangement in accordance with a first embodiment of the present invention;
Fig. 2 is a block schematic diagram of part of a gas fired boiler arrangement in accordance with a second embodiment of the present invention;
Fig. 3 is a block schematic diagram of a modified form of the arrangement of Fig. 2 to provide for electrical isolation; and
Fig. 4 is a circuit diagram of an exemplary form of the arrangement of Fig. 3.

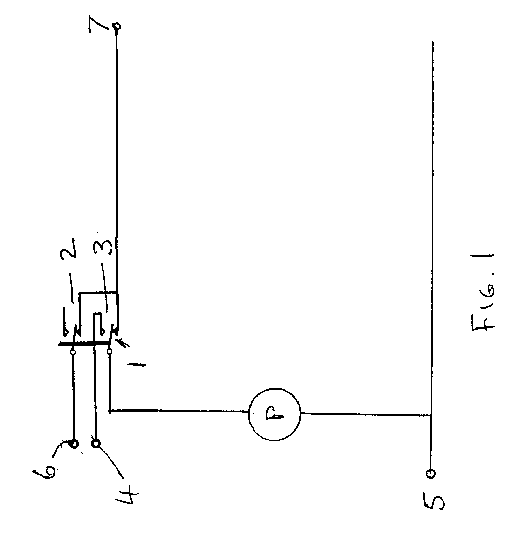

In Fig. 1 of the drawings there is shown a thermostatically operated switch arrangement 1 which comprises two double pole switches 2 and 3 which are shown in the de-energised position. The thermostatically operated switch arrangement 1 is adapted to monitor the outgoing water temperature of the gas fired boiler, and is arranged to have a large differential operating temperature, e.g. 15°C, so that the switches 2 and 3 switch from their first positions as shown in Fig. 1 to their second positions when the outgoing water temperature reaches a predetermined temperature, and switch back to their first positions as shown in Fig. 1 when the outgoing water temperature reaches the lower differential operating temperature which, e.g., is typically 15°C below the predetermined temperature.

In the arrangement shown in Fig. 1, a permanent live signal is applied to an input 4, the relative neutral signal thereof being applied to an input 5. A switched live signal, which is indicative of a call for heat and which may typically be derived from a room thermostat or time switch, is also applied to an input 6.

The permanent live signal applied to input 4 is applied to the energised contact of switch 3, the other de-energised contact of which is connected to an output 7 and also to the de-energised contact of switch 2. The switched live signal applied to input 6 is connected to the wiper contact of switch 2 and in the de-energised position of the switches shown in Fig. 1 is connected to the output 7 and also via the wiper contact of switch 3 to a pump P which is also connected to the neutral input 5. The output 7 of the arrangement of Fig. 1 would, in the case of a permanent pilot system, be adapted to control a gas valve which supplies gas to a gas burner, or may be applied as an input to a full sequence control arrangement for controlling the operation of a gas burner.

The operation of the arrangement of Fig. 1 is as follows:

When there is a call for heat, a switched live signal is applied to input 6 and this causes an output to be afforded at output 7, which subsequently causes a gas burner (not shown) to be lit, and also causes the pump P to be energised. The pump P causes the hot water in the heat exchanger (not shown) which is heated by the gas burner to be circulated and the temperature of the outgoing water is monitored by the thermostatically operated switch arrangement 1. When a predetermined temperature is reached the switch arrangement 1 energises and the switches 2 and 3 switch to their energised positions in which the switched live signal is disconnected from the output 7 thereby causing the gas burner (not shown) to be cut-off. However, the switch 3 now connects the pump P to the fixed live input 4 so that the pump P is maintained energised so as to continue to circulate the water in the system.

When the temperature of the outgoing water falls to the point where the lower differential temperature is reached, the switches 2 and 3 of the switch arrangement 1 are again operated to the de-energised state shown in Fig. 1 of the drawings, at which time the process will be repeated dependent upon whether there is a call for heat applied to the switched live input 6.

It will therefore be appreciated that the arrangement of Fig. 1 provides a pump overrun facility without the necessity of providing two thermostats.

Whilst the arrangement of Fig. 1 operates satisfactorily, it suffers from the drawback that the temperature of the outgoing water varies substantially over a range which corresponds to the differential temperature range of the thermostatically operated switch arrangement 1.

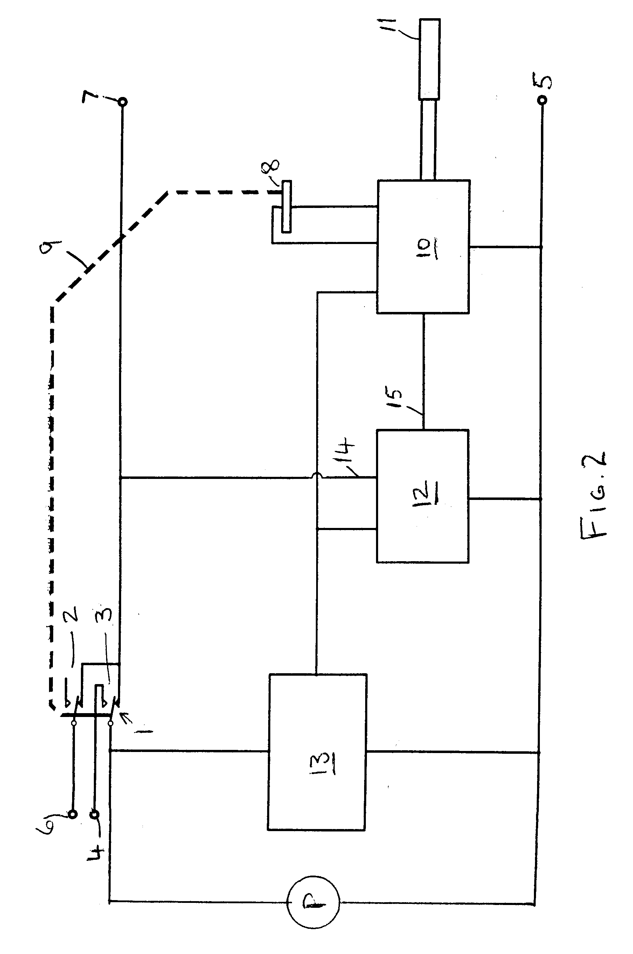

This drawback is overcome by the embodiments to be described with reference to Figs. 2 to 4 of the accompanying drawings.

The embodiment of Fig. 2 is similar to that of Fig. 1 except that the switch arrangement 1 forms part of a relay consisting of a relay coil 8 and the switches 2 and 3, as shown by the dashed lines 9. A temperature control circuit 10 is provided which operates the relay coil 1 in response to the temperature detected by a temperature sensor 11 which monitors the outgoing water temperature. A timer circuit 12 is provided which overrides the temperature control circuit 10 to force the energisation of the relay coil 8 whenever a live feed 14 is lost following a boiler firing. A power supply 13 energises the timer circuit 12 and temperature control circuit 10.

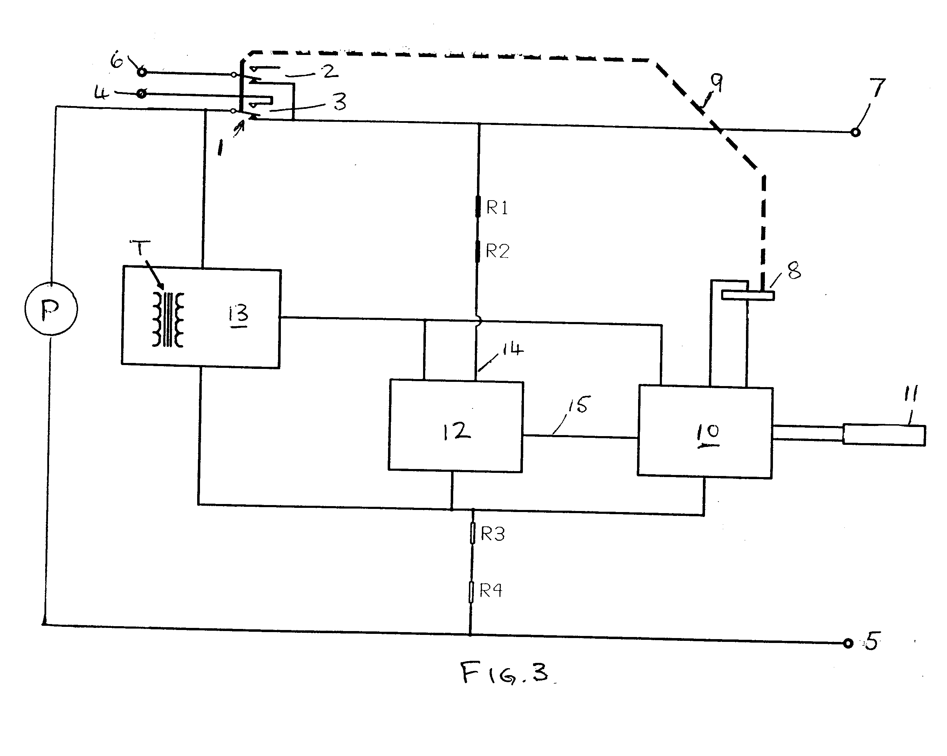

The power supply circuit 13 may, though not essentially, provide electrical isolation from the mains electricity supply if it is required to operate the sensor 11 close to earthed metalwork, etc. In this case, an arrangement of current limiting protective resistors may be provided as shown in Fig. 3.

In operation of the arrangement of Fig. 2, assuming a permanent live supply is applied to input 4 relative to the neutral input 5, and that the sensor 11 is registering a low temperature so as to require heat, then the relay switches 2 and 3 would be in the positions shown. When a switched live supply is applied to an input 6, signalling a demand for heat, the switched live supply is fed via the switch 2 to cause the switched live signal to be fed to output 7 to cause the gas burner (not shown) to be lit as in the embodiment of Fig. 1.

Also, via the switch 3 of the relay, the pump P and the power supply circuit 13 are energised, both via the switched live supply applied to input 6.

As the boiler temperature increases, it is monitored by the temperature sensor 11. When the signal return from the sensor 11 exceeds a predetermined temperature reference, the temperature control circuit 10 activates the relay coil 8 to cause the switches 2 and 3 to be operated.

The switch 3 now causes the pump P and the power supply circuit 13 to continue being energised, but be fed from the permanent live supply applied to input 4 instead of from the switched live supply applied to input 6. Also, the live feed to the output 7 and thus to the gas burner (not shown) is interrupted so that further temperature increase is halted.

The interruption of the live feed to the output 7 also causes the loss of the live feed 14 to the timer circuit 12 so that its timing is now started. The output 15 from the timer circuit 12 is applied to the temperature control circuit 10 to prevent any further activation of the relay during the timing period even though the temperature registered by the sensor 11 may fall sufficiently to signal a burner restart. Thus, a forced "hold-off" is produced which prevents rapid cycling of the burner light up sequence.

At the end of the timing period of the timing circuit 12, assuming the temperature detected by the sensor 11 has fallen sufficiently to warrant a restart, the relay is permitted to return to its original position as shown in Fig. 2 to restart the operation.

It may be seen that the timer circuit 12 operates in a similar way if the switched live supply applied to input 6 is lost, indicating loss of the external call for heat, since the live feed 14 to the timer circuit 12 will again signal the commencement of the timing cycle.

In Fig. 3 of the drawings, there is shown an electrically isolated variant of the arrangement of Fig. 2. In Fig. 3 the power supply circuit 13 now includes an isolating transformer T, and protective resistors R1 - R4 are provided associated with the timer circuit 12.

Operation of the arrangement of Fig. 3 is similar to that of Fig. 2, except that the transformer T provides basic isolation between the mains electricity inputs and the temperature sensor circuitry. However, since the timer part of the circuit operates in response to a mains voltage signal, it is necessary to apply the signal to the timer circuit 12 via a protective high impedance path. The provision of high value resistors in pairs R1,R2 and R3,R4 maintain satisfactory isolation in the event of the failure by short circuit of any one component whilst allowing the "timing request" information to pass. The values of each resistor must be chosen to be high enough to limit any possible leakage current to a safe level even with its companion resistor short circuited.

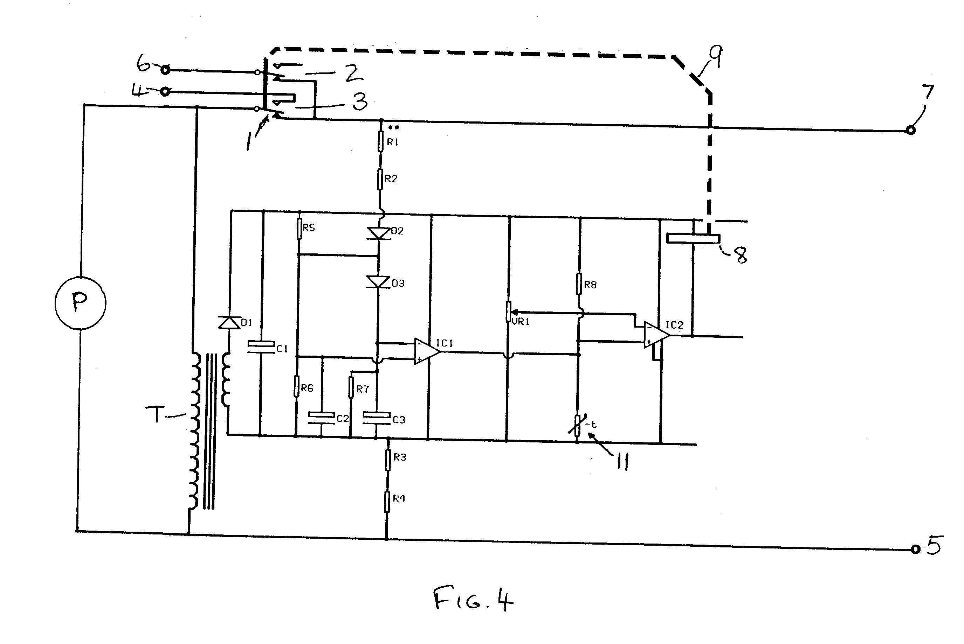

The timer circuit 12 may be implemented using any timing technology, for example, counting, thermal or mechanical components, but a preferred arrangement would employ the charging and/or discharging of a capacitor as will be described with reference to Fig. 4. The use of this arrangement provides the possibility of delaying the restart of the appliance even in the event of a complete electricity supply removal and subsequent restoration since the charge in the capacitor timing element is not lost when the supply is absent.

Fig. 4, by way of example only, shows in detail a possible implementation of the arrangement of Fig. 3, incorporating both isolation of the sensor 11 from the mains supply and the use of a capacitor as the timing element of the "hold-off" period.

The power supply circuit 13 of the arrangement comprises transformer T, diode D1 and capacitor C1.

The temperature control circuit 10 part of the arrangement is formed by a comparator IC2, potentiometer VR1, resistor R8 and a negative temperature coefficient thermistor temperature sensor 11. This part of the circuit essentially de-energises the relay coil 8 when the temperature sensed by the thermistor sensor 11 is below that demanded by the setting of VR1 and energises the relay coil 8 when the required temperature is reached. It may be noted here that it is not necessary to provide hysteresis (or thermostat differential) using this circuit since "chatter" or rapid cycling is inherently eliminated by the timing circuit 12.

The timing circuit 12 part of the arrangement is formed by resistors R1 to R7, capacitors C2 and C3, diodes D1 and D2 and comparator IC1. When there exists a call for heat, a switched live signal is applied to input 6, and both capacitors C2 and C3 are charged by the current flow through resistors R1 to R4 and diodes D2 and D3. Due to the volt drop across diode D3 it follows that the inverting (-) input of IC1 will be at a lower voltage than that which exists on the non-inverting (+) input. This causes the output of IC1 to be in an effective "open-circuit" state to allow the unhindered operation of the temperature control circuit 10. At this time, due to the position of the relay switches 2 and 3, the transformer T is energised to produce a DC supply voltage across capacitor C1 for use by the comparators IC1, IC2, etc., and also the pump P is energised.

When the call for heat is lost, the current flow through resistors R1 to R4 is halted. The discharge of capacitors C2 and C3 now commences. By choosing the circuit values appropriately, the discharge time constant for capacitor C2 is made less than that for capacitor C3 so that there becomes an almost instantaneous reversal of the voltage on the inputs of IC1 to cause its output to go low so as to force the IC2 output to go low, so holding on the relay regardless of the temperature of the thermistor sensor 11.

Capacitor C2 discharges to a reference voltage as defined by R5 and R6. After the timing period, when the slower discharge of capacitor C3 has caused its voltage to fall below that of capacitor C2, the voltage on IC1 again reverses to enable the de-energisation of the relay if the temperature of the sensor 11 has fallen low enough to require a restart. Thus the pump P is maintained energised for a period after the burner has shut down and restart of the appliance is prevented until the end of the "hold-off" period.

If the external call for heat is lost during a run, the pump overrun will continue until C3 has discharged but when the pump P is stopped, the live feed to the transformer T is also interrupted thus de-energising the whole arrangement to eliminate electrical energy wastage during off periods.

By means of the embodiments of Figs. 2 to 4, pump overrun is provided to prevent overheating, and since a timed "hold-off" period is provided at the end of each burner run, during which restart cannot take place, rapid cycling is prevented. Since rapid cycling is prevented in this way, the temperature sensing part of the control can have a very small or even zero differential so that the temperature of the outgoing water may be maintained within an acceptable range.

## Claims

1. A gas fired boiler arrangement comprising a gas burner, a heat exchanger which is heated by said gas burner when said gas burner is ignited, pump means for causing fluid to flow through said heat exchanger to be heated thereby, and a boiler control arrangement for controlling the operation of said gas burner and said pump, said boiler control arrangement comprising switch means having two positions, which, in one position thereof is responsive to a demand for heat for causing said gas burner to be ignited and said pump means to be operated, and which is responsive to a sensed temperature for causing the switch means to assume a second position thereof in which said pump means is caused to operate without said gas burner being ignited for pump overrun purposes.

2. An arrangement as claimed in claim 1, in which said switch means forms part of a thermostatic control in which said switch means switches from said one position to said second position in response to a first sensed temperature, and switches from said second position to said one position in response to a second sensed temperature, said second sensed temperature being lower than said first sensed temperature.

3. An arrangement as claimed in claim 2, in which said switch means comprises a first two-position switch to which a switched live supply is applied corresponding to a call for heat, and which in a de-energised first position of said first switch applies said switched live supply to means for causing said burner means to be ignited, and in which said switch means comprises a second two-position switch which, in a de-energised first position, connects said pump means to the switched live supply afforded by said first switch, and which in an energised second position thereof connects said pump means to a permanent live supply for pump overrun purposes.

4. An arrangement as claimed in claim 1, comprising temperature sensing means for causing said switch means to be operated to its second position in response to a predetermined temperature being sensed, and timer means for maintaining said switch means in said second position for a predetermined time period for causing said pump means to be operated for pump overrun purposes.

5. An arrangement as claimed in claim 4, comprising power supply means which is energised when said pump means is energised and which supplies power to said temperature sensing means and said timer means.

6. An arrangement as claimed in claim 5, in which said power supply means comprises an isolating transformer, and isolating resistor means are provided for electrically isolating said timer means and said temperature sensing means.

7. An arrangement as claimed in claim 5 or claim 6, in which said switch means comprises a first two-position switch to which a switched live supply is applied corresponding to a call for heat, and which in a de-energised first position of said first switch applies said switched live supply to said timer means and to means for causing said burner means to be ignited, and in which said switch means comprises a second two-position switch which, in a de-energised first position, connects said pump means and said power supply means to the switched live supply afforded by said first switch, and which in an energised second position thereof connects said pump means and said power supply means to a permanent live supply for pump overrun purposes.

8. An arrangement as claimed in claim 7, in which said first switch and said second switch are constituted by relay contacts of a relay which is operated by said temperature sensing means.
